# EUROPÄISCHE PATENTSCHRIFT

(11) **EP 1 911 633 B1**
(45) Veröffentlichungstag und Bekanntmachung des Hinweises auf die Patenterteilung: **20.01.2010**
(21) Anmeldenummer: 07113416.7
(22) Anmeldetag: 30.07.2007
(51) Int. Cl.: B60R 16/02, C09J 7/04

(54) **Kabelwickelband, insbesondere für den Motorenraum eines Automobils**
Cable wrapping tape, in particular for the motor area of an automobile
Bande d'enroulement de câble, en particulier pour l'espace du moteur d'une automobile

(30) Priorität: 11.10.2006 DE 202006015701 U
(43) Veröffentlichungstag der Anmeldung: 16.04.2008
(73) Patentinhaber: Coroplast Fritz Müller GmbH & Co. KG, 42279 Wuppertal (DE)
(72) Erfinder: Frigge, Christoph, 45549 Sprockhövel (DE); Wittig, Gülay, 44799 Bochum (DE); Lodde, Christoph, 44229 Dortmund (DE)
(74) Vertreter: Patentanwälte Dr. Solf & Zapf

(56) Entgegenhaltungen:
- EP-A- 0 995 782
- EP-A- 1 022 835
- EP-A- 1 258 347
- DE-A1- 19 910 730
- DE-U1- 20 000 130
- DE-U1-202004 019 761

## Beschreibung

Die Erfindung betrifft ein Kabelwickelband, insbesondere für den Motorenraum eines Automobils, mit einem bandförmigen, aus Gewebe bestehenden Träger, der mindestens auf einer Seite mit einer selbstklebenden Klebeschicht versehen ist, die aus einem Haftklebstoff besteht. Ein Kabelwickelband gemäss dem Oberbegriff des Anspruchs 1 ist aus DE 20 2004 019 761 U1 bekannt.

Kabelsätze werden, insbesondere im Automobilbereich, gewöhnlich mit Klebebändern umwickelt. Neben der reinen Bündelungsfunktion haben dabei vor allem textile Klebebänder mittlerweile zahlreiche Zusatzfunktionen, wie den Schutz der Leitungen vor Abrieb oder die Dämpfung von Klapper- oder Vibrationsgeräuschen, übernommen. Weit verbreitet ist dabei der Einsatz von gattungsgemäßen Gewebeklebebändern aus Zellwolle oder von Polyester (PET) und von Veloursbändern aus Polyester sowie aus Polyamid und auch von verschiedenen, meist ebenfalls auf Polyester basierenden Vliesklebebändern.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind.

So wird die Abriebbeständigkeit nach LV 312 in Anlehnung an DIN ISO 6722 bestimmt, indem das Klebeband zunächst auf einen Dorn (Metallstab) mit 5 oder 10 mm Durchmesser aufgeklebt wird. Mit einem Schabwerkzeug, das einen Nadeldurchmesser von 0,45 mm aufweist, wird dann unter einer Gewichtskraft von 7 N die Anzahl der Hübe bestimmt, die benötigt wird, um das Klebeband durchzuscheuern.

Hinsichtlich der Abriebbeständigkeit ist in der LV 312 die in der nachstehenden Tabelle 1 wiedergegebene Klassifizierung vorgesehen.

**Tabelle 1: Einteilung der Abriebklassen nach LV 312**

| Abriebklasse | Anforderung (Anzahl Hübe) |
|---|---|
| A - kein Abriebschutz | < 100 |
| B - geringer Abriebschutz | 100 - 499 |
| C - mittlerer Abriebschutz | 500 - 999 |
| D - hoher Abriebschutz | 1000 - 4999 |
| E - sehr hoher Abriebschutz | 5000 und mehr |

Als weitere anwendungstechnisch wichtige Prüfungen sind in dieser Richtlinie beispielsweise auch Prüfmethoden für thermische Beständigkeit, die Kompatibilität von Klebebändern mit elektrischen Fahrzeugleitungen sowie für die Chemikalienbeständigkeit, das Geräuschdämpfungsverhalten und das Fogging-Verhalten beschrieben.

Ein bekanntes Klebeband, das sich nach einer Prüfung in seinem Eigenschaftsbild als der Klasse E entsprechend erwiesen hat, ist in der DE 298 23 462 U1 (Anmelder: Hänsel Verbundtechnik GmbH & Co. KG) beschrieben. Diese betrifft eine Schutzummantelung, die aus einem inneren Faservlies und aus einem äußeren Velours besteht. Es handelt sich bei dem bekannten hochabriebfesten Klebeband somit um in Bezug auf den Träger um ein Verbundmaterial, womit eine entsprechend hohe Banddicke, insbesondere eine Dicke von mehr als 0,8 mm, verbunden ist. Außerdem ist das bekannte Band nicht maschinell verarbeitbar und zeigt am Kabelsatz ein Flagging, so dass seine Enden beim Einsatz fixiert werden müssen. So ergeben sich nachteiligerweise neben der hohen Banddicke auch hohe Verarbeitungszeiten.

Ein weiteres bekanntes, im Handel befindliches hochabriebfestes Klebeband ist das der Firma FFA Automotive AG, bei dem es sich ebenfalls um ein Verbundmaterial handelt, und zwar um ein Verbundmaterial aus einem PA-Velours und einer PET-Folie.

Demgegenüber ist mit gattungsgemäßen Klebebändern, die nicht als Verbundmaterial aufgebaut sind und die daher eine geringere Dicke, insbesondere eine Dicke von weniger als 0,5 mm, aufweisen, wie die bekannten Gewebeklebebänder auf Zellwoll- oder PET-Basis, keine hohe Abriebfestigkeit erzielbar.

Der vorliegenden Erfindung liegt die Aufgabe zu Grunde, ein in der Herstellung wenig aufwändiges Kabelwickelband der eingangs genannten Art zu schaffen, das die genannten Nachteile des bekannten Standes der Technik überwindet. Insbesondere soll ein erfindungsgemäßes Klebeband bei einer Dicke von weniger als 0,5 mm und bei Vermeidung des Vorhandenseins einer Velour- oder Vliesschicht im Träger Höchstwerte der Abriebfestigkeit aufweisen. Darüber hinaus soll dabei das erfindungsgemäße Klebeband auch weitere Anforderungen der vorstehend genannten Prüfrichtlinie LV 312 erfüllen, eine Schmiegsamkeit wie ein Polyestergewebeklebeband aufweisen und sowohl manuell als auch maschinell verarbeitbar sein.

Diese Aufgabe wird mit einem Klebeband der eingangs genannten Art gelöst, bei dem das Gewebe des Trägers aus einem Garn besteht, welches aus einem Polyamidwerkstoff gebildet ist und welches eine Garnstärke von mehr als 280 dtex aufweist, wobei das Garn aus 24 bis 80 Filamenten gebildet ist und wobei das Kabelwickelband sowohl an einem Dorn mit 5 mm Durchmesser, als auch an einem Dorn mit 10 mm Durchmesser die Abriebklasse E gemäß LV 312 erfüllt.

Überraschenderweise hat sich gezeigt, dass es trotz der Abwesenheit von Velour- oder Vliesschichten im Träger mit dem erfindungsgemäßen Garnaufbau möglich ist, ein Kabelwickelband mit vergleichsweise geringer Dicke, insbesondere einer Dicke von 0,30 bis 0,45 mm, und höchster Abriebfestigkeit herzustellen. Hierbei kommt offenbar eine synergistische Wirkung der Kombination des Polyamidwerkstoffes des Garns mit dessen Fadenfeinheit und mit dessen Fadenaufbau zum Tragen.

Was die Klebstoffbeschichtung betrifft, so können als druckempfindliche Haftklebstoffe vorzugsweise Acrylatklebstoffe, insbesondere UV-vernetzbare Acrylatklebstoffe, aber auch Synthese- und auch Naturkautschukklebstoffe eingesetzt werden. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenen Leitungen aus.

Um die bei der spiralförmigen Bewicklung von Kabelsätzen erforderlichen Haftwerte auf dem Bandrücken von vorzugsweise 5,7 bis 6,4 N/cm zu erreichen, wird vorteilhafterweise mit Auftragsgewichten der Klebstoffbeschichtung von 60 bis 150 g/m², vorzugsweise von 95 bis 105 g/m², gearbeitet.

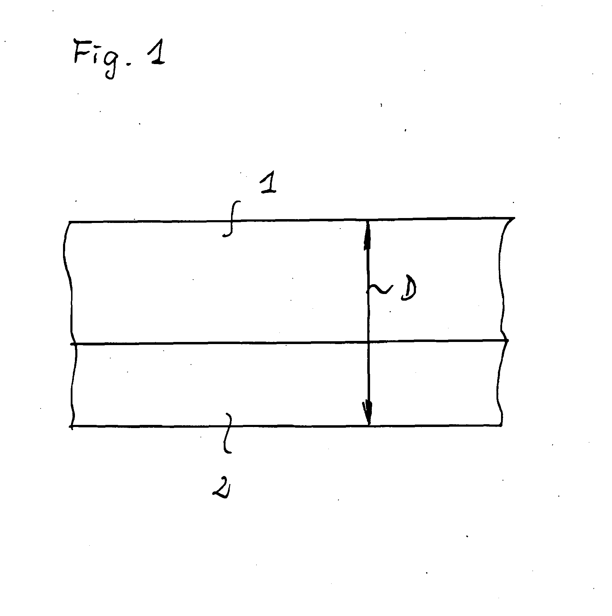

Weitere vorteilhafte Ausführungen der Erfindung sind in den Unteransprüchen und der nachfolgenden speziellen Beschreibung enthalten. Anhand eines Ausführungsbeispiels und mehrerer Vergleichsbeispiele wird unter Bezugnahme auf die Zeichnung die Erfindung dabei näher erläutert. Dabei zeigt
Fig. 1 einen Querschnitt durch ein erfindungsgemäßes Kabelwickelband.

Wie aus Fig. 1 hervorgeht, umfasst ein erfindungsgemäßes Kabelwickelband, insbesondere ein für den Einsatz im Motorenraum eines Automobils bestimmtes Kabelwickelband, einen bandförmigen, aus Gewebe bestehenden Träger 1, der mindestens auf einer Seite mit einer selbstklebenden Klebeschicht 2 versehen ist, die aus einem Haftklebstoff besteht.

Das Gewebe des Trägers 1 besteht aus einem Garn, welches aus einem Polyamidwerkstoff, insbesondere aus PA 6.6, gebildet ist und welches eine Garnstärke von mehr als 280 dtex, insbesondere von 470 dtex, aufweist. Das Garn ist aus 24 bis 80 Filamenten, insbesondere aus 48 bis 80 Filamenten, vorzugsweise aus 68 Filamenten, gebildet. Dabei sollten keine Stapelfasern verwendet werden.

Das erfindungsgemäße Kabelwickelband erfüllt sowohl an einem Dorn mit 5 mm Durchmesser, als auch an einem Dorn mit 10 mm Durchmesser die Abriebklasse E gemäß LV 312. Diese Einordnung wird üblicherweise auch mit "Abriebklasse E/E" bezeichnet.

Das Kabelwickelband weist eine Dicke auf, die mit dem Bezugszeichen D bezeichnet ist und kleiner ist als 0,50 mm. Insbesondere liegt die Dicke D im Bereich von 0,30 bis 0,45 mm.

Im Speziellen wurde als Ausführungsbeispiel für die Erfindung ein Kabelwickelband hergestellt, dessen Träger 1 die nachstehend in Tabelle 2 wiedergegebene Gewebekonstruktion aufwies.

Der Träger 1 wurde auf einer Seite mit ca. 100 g/m² eines UV-vernetzenden Acrylatklebstoffs beschichtet. Das Acrylat wurde zur Bildung der Klebebeschichtung 2 vernetzt und das Material auf sich selbst gewickelt. Anschließend wurde die so gebildete Rolle in gewünschter Weise als auf sich selbst gewickeltes Klebeband konfektioniert.

Das so hergestellte erfindungsgemäße Band verfügte neben den hohen Werten der Abriebbeständigkeit und der im Vergleich zu Verbundmaterialien geringen Banddicke D über eine sehr gute Temperaturstabilität (125 °C/ 150 °C nach LV 312), war manuell und maschinell verarbeitbar, schmiegsam und zeigte bei der Verarbeitung kein Flagging.

**Tabelle 2: Gewebekonstruktion eines erfindungsgemäßen Kabelwickelbandes**

| Parameter | Einheit | Größe |
|---|---|---|
| Trägermaterial | | PA-Gewebe |
| Garnart | | PA 6.6 |
| Flächengewicht | g/m² | 180 |
| Ganggewicht Kette | dtex | 470 |
| Ganggewicht Schuss | dtex | 470 |
| Filamentanzahl im Kettfaden | | 68 |
| Filamentanzahl im Schussfaden | | 68 |
| Anzahl Fäden Kette | 1/cm | 21-22 |
| Anzahl Fäden Schuss | 1/cm | 15-16 |

In Tabelle 3 sind die Basisdaten eines erfindungsgemäßen Kabelwickelbandes (Band A) mit ihren möglichen und - in Klammern angegeben jeweilig bevorzugten - Variationsbereichen denjenigen eines herkömmlichen PET-Gewebe-Kabelwickelbandes (Band B) gegenübergestellt.

Die Ermittlung der angegebenen technischen Parameter erfolgt dabei nach den jeweils üblichen Normen: EN ISO 2286-1 für das spezifische Gewicht des Trägers 1, DIN EN 1942 für die Dicke D, DIN EN 14410 für die mechanischen Werte, DIN EN 1939 für die Klebkraft und DIN EN 1944 für die Abrollkraft des Klebebandes. Das Flaggingverhalten ist nach LV 312 zu bestimmen.

**Tabelle 3: Basisdaten eines erfindungsgemäßen Kabelwickelbandes (Band A) im Vergleich zu einem PET-Gewebe-Kabelwickelband (Band B)**

| Eigenschaft | Einheit | Band B | Band A |
|---|---|---|---|
| Trägermaterial | - | PET | PA |
| Trägergewicht | g/m² | 127-133 | 130-250 (180-186) |
| Anzahl Kettfäden | 1/cm | 44-47 | 18-60 (21- 22) |
| Anzahl Schussfäden | 1/cm | 24-27 | 10-30 (15-16) |
| Kleberauftrag | g/m² | 95-105 | 95-105 |
| Banddicke | mm | 0,24-0,25 | 0,30-0,45 |
| Mechanische Werte Reißdehnung Reißfestigkeit | % | 35 - 40 | > 60 |
| | N/cm | 270 - 315 | > 700 |
| Klebkraft auf Stahl auf Bandrücken | N/cm | 4,8 - 12,7 | 4,5 - 5,7 |
| | N/cm | 10,3 - 14,3 | 5,7 - 6,4 |
| Abrollkraft | N/19 mm | 4,2 - 7,0 | 6,2 - 12,3 |
| Flagging 30 min, 24 h | - | kein Flagging | kein Flagging |

Tabelle 4 gibt neben einem Vergleich der Abriebdaten eines erfindungsgemäßen Kabelwickelbandes (Band A) mit denen eines PET-Gewebe-Kabelwickelbandes von 0,3 mm Dicke (Band B) auch den Vergleich mit den Abriebdaten eines Polyamid-Velours-Kabelwickelbandes von 1,2 mm Dicke (Band C), eines eingangs genannten hochabriebfesten Bandes der Fa. Hänsel Verbundtechnik GmbH & Co. KG von 1,8 mm Dicke (Band D) und eines handelsüblichen Verbund-Klebebandes der Firma FFA Automotive AG (Band E) wieder. Bei dem Band D handelt es sich dabei um ein Verbundmaterial aus einem PA-Velours, einer PET-Folie und einem PET-Vlies und bei dem Band E um ein Verbundmaterial aus einem PA-Velours und einer PET-Folie.

**Tabelle 4: Vergleich der Abriebdaten verschiedener Kabelwickelbänder**

| Probe | 5 mm Dorn Anzahl Hübe / Klasse | 10 mm Dorn Anzahl Hübe / Klasse |
|---|---|---|
| B | 500 - 700 Klasse C | 1800 - 2200 Klasse D |
| C | 3500 - 5500 Klasse D | 9000 - 13000 Klasse E |
| D | 8058 - 11282 Klasse E | 26000 - 30055 Klasse E |
| E | 11090 - 25838 Klasse E | 22876 - 46678 Klasse E |
| A | 8950 - 10000 Klasse E | 20000 - 23200 Klasse E |

Die vorstehende Tabelle 4, in der unter der jeweiligen Anzahl der erreichten Hübe die entsprechende Klasse der Abriebbeständigkeit angegebenen ist, veranschaulicht die extrem hohe Abriebbeständigkeit eines erfindungsgemäßen Kabelwickelbandes (Band A), die von einem PET-Gewebe-Kabelwickelband (Band B) gar nicht und den aufgeführten Velours- bzw. Verbund-Kabelwickelbändern (Band C, D, E) zwar erreicht wird, aber nur bei den schon eingangs erwähnten hohen Banddicken.

Die Erfindung ist nicht auf das dargestellte Ausführungsbeispiel beschränkt, sondern umfasst im Rahmen des Anspruchs 1 auch alle im Sinne der Erfindung gleichwirkenden Ausführungen. Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Träger
- 2: Klebeschicht

- D: Dicke von 1 und 2

## Patentansprüche

1. Kabelwickelband, insbesondere für den Motorenraum eines Automobils, welches die Abriebklasse E gemäß LV 312 erfüllt, mit einem bandförmigen Träger (1), der mindestens auf einer Seite mit einer selbstklebenden Klebeschicht (2) versehen ist, die aus einem Haftklebstoff besteht,
**gekennzeichnet durch** eine Dicke (D) von weniger als 0,50 mm, wobei der Träger (1) aus einer einzigen aus einem Gewebe gebildeten Schicht besteht und das Gewebe des Trägers (1) aus einem Garn besteht, welches aus einem Polyamidwerkstoff gebildet ist, eine Garnstärke von mindestens 280 dtex aufweist und aus 24 bis 80 Filamenten gebildet ist, wobei das Kabelwickelband sowohl an einem Dorn mit 5 mm Durchmesser, als auch an einem Dorn mit 10 mm Durchmesser die Abriebklasse E gemäß LV 312 erfüllt.

2. Kabelwickelband nach Anspruch 1,
**gekennzeichnet durch** eine Dicke von weniger als 0,50 mm, insbesondere eine Dicke (D) im Bereich von 0,30 bis 0,45 mm.

3. Kabelwickelband nach Anspruch 1 oder 2,
**dadurch gekennzeichnet, dass** der Träger (1) ein Flächengewicht von 130 bis 250 g/m², vorzugsweise von 180 bis 186 g/m², aufweist.

4. Kabelwickelband nach einem der Ansprüche 1 bis 3,
**dadurch gekennzeichnet, dass** die Anzahl der Kettfäden im Gewebe des Trägers (1) im Bereich von 18 bis 60 je cm, vorzugsweise von 21 bis 22 je cm, liegt.

5. Kabelwickelband nach einem der Ansprüche 1 bis 4,
**dadurch gekennzeichnet, dass** die Anzahl der Schussfäden im Gewebe des Trägers (1) im Bereich von 10 bis 30 je cm, vorzugsweise von 15 bis 16 je cm, liegt.

6. Kabelwickelband nach einem der Ansprüche 1 bis 5,
**dadurch gekennzeichnet, dass** die Garnstärke 470 dtex beträgt.

7. Kabelwickelband nach einem der Ansprüche 1 bis 6,
**dadurch gekennzeichnet, dass** das Garn aus 48 bis 80 Filamenten, vorzugsweise aus 68 Filamenten, gebildet ist.

8. Kabelwickelband nach einem der Ansprüche 1 bis 7,
**gekennzeichnet durch** eine Reißdehnung von mindestens 60 %.

9. Kabelwickelband nach einem der Ansprüche 1 bis 8,
**gekennzeichnet durch** eine Reißfestigkeit im Bereich von mehr als 700 N/cm.

10. Kabelwickelband nach einem der Ansprüche 1 bis 9,
**dadurch gekennzeichnet, dass** der Haftklebstoff der selbstklebenden Klebeschicht (2) ein Acrylatklebstöff, insbesondere ein UV-vernetzbarer Acrylatklebstoff, ist.

11. Kabelwickelband nach einem der Ansprüche 1 bis 10,
**dadurch gekennzeichnet, dass** der Haftklebstoff in der Klebeschicht (2) mit einem spezifischen Flächengewicht von etwa 60 bis 150 g/m², vorzugsweise von etwa 95 bis 105 g/m², aufgetragen ist.

12. Kabelwickelband nach einem der Ansprüche 1 bis 11,
**dadurch gekennzeichnet, dass** die Klebkraft auf dem Bandrücken im Bereich von 5,7 bis 6,4 N/cm liegt.

13. Kabelwickelband nach einem der Ansprüche 1 bis 12,
**dadurch gekennzeichnet, dass** die Klebkraft auf Stahl im Bereich von 4,5 bis 5,7 N/cm liegt.

14. Kabelwickelband nach einem der Ansprüche 1 bis 13,
**dadurch gekennzeichnet, dass** die Abrollkraft im Bereich von 6,2 bis 12,3 N/ 19 mm liegt.

## Claims

1. A cable wrapping tape, in particular for the engine compartment of an automobile, which satisfies abrasion class E according to LV 312, comprising a strip-type substrate (1) which is provided at least on one side with a self-sticking adhesive layer (2) consisting of a pressure-sensitive adhesive,
**characterised by** a thickness (D) of less than 0.50 mm, the substrate (1) consisting of a single layer formed by a fabric and the fabric of the substrate (1) consisting of a yarn which is formed from a polyamide material, has a yarn thickness of at least 280 dtex and is formed from 24 to 80 filaments, wherein the cable wrapping tape satisfies abrasion class E according to LV 312 both on a mandrel with a diameter of 5 mm and on a mandrel with a diameter of 10 mm.

2. A cable wrapping tape according to claim 1, **characterised by** a thickness of less than 0.50 mm, especially a thickness (D) in the range from 0.30 to 0.45 mm.

3. A cable wrapping tape according to claim 1 or 2, **characterised in that** the substrate (1) has a basis weight of 130 to 250 g/m², preferably 180 to 186 g/m².

4. A cable wrapping tape according to any one of claims 1 to 3, **characterised in that** the number of warp threads in the fabric of the substrate (1) lies in the range from 18 to 60 per cm, preferably 21 to 22 per cm.

5. A cable wrapping tape according to any one of claims 1 to 4, **characterised in that** the number of weft threads in the fabric of the substrate (1) lies in the range from 10 to 30 per cm, preferably 15 to 16 per cm.

6. A cable wrapping tape according to any one of claims 1 to 5, **characterised in that** the yarn thickness is 470 dtex.

7. A cable wrapping tape according to any one of claims 1 to 6, **characterised in that** the yarn is formed from 48 to 80 filaments, preferably 68 filaments.

8. A cable wrapping tape according to any one of claims 1 to 7, **characterised by** an elongation at tear of at least 60%.

9. A cable wrapping tape according to any one of claims 1 to 8, **characterised by** a tear strength in the region of more than 700 N/cm.

10. A cable wrapping tape according to any one of claims 1 to 9, **characterised in that** the pressure-sensitive adhesive of the self-sticking adhesive layer (2) is an acrylate adhesive, in particular a UV-cross-linkable acrylate adhesive.

11. A cable wrapping tape according to any one of claims 1 to 10, **characterised in that** the pressure-sensitive adhesive in the adhesive layer (2) is applied with a specific basis weight of approximately 60 to 150 g/m², preferably approximately 95 to 105 g/m².

12. A cable wrapping tape according to any one of claims 1 to 11, **characterised in that** the adhesive force on the back of the tape lies in the range from 5.7 to 6.4 N/cm.

13. A cable wrapping tape according to any one of claims 1 to 12, **characterised in that** the adhesive force on steel lies in the range from 4.5 to 5.7 N/cm.

14. A cable wrapping tape according to any one of claims 1 to 13, **characterised in that** the unwinding force lies in the range from 6.2 to 12.3 N/19 mm.

## Revendications

1. Bande d'enroulement de câble, en particulier pour le compartiment du moteur d'un véhicule automobile, laquelle satisfait à la classe d'usure E selon LV 312, comportant un support (1) en forme de bande, dont au moins une face est revêtue d'une couche auto-adhésive (2), qui est formée par une matière adhésive,
**caractérisée par** une épaisseur (D) inférieure à 0,50 mm, le support (1) étant formé par une seule couche réalisée en tissu, et le tissu du support (1) étant formé par un fil, qui est réalisé dans un matériau polyamide, a une grosseur de 280 dtex au moins et est formé par 24 à 80 filaments, la bande d'enroulement de câble satisfaisant à la classe d'usure E selon LV 312 tant sur un mandrin de 5 mm de diamètre que sur un mandrin de 10 mm de diamètre.

2. Bande d'enroulement de câble selon la revendication 1, **caractérisée par** une épaisseur inférieure à 0,50 mm, en particulier une épaisseur (D) dans une plage de 0,30 à 0,45 mm.

3. Bande d'enroulement de câble selon la revendication 1 ou 2, **caractérisée en ce que** le support (1) a un poids par unité de surface de 130 à 250 g/m², de préférence de 180 à 186 g/m².

4. Bande d'enroulement de câble selon l'une quelconque des revendications 1 à 3, **caractérisée en ce que** le nombre de fils de chaîne dans le tissu du support (1) se situe dans une plage de 18 à 60 fils par cm, de préférence 21 à 22 fils par cm.

5. Bande d'enroulement de câble selon l'une quelconque des revendications 1 à 4, **caractérisée en ce que** le nombre de fils de trame dans le tissu du support (1) se situe dans une plage de 10 à 30 fils par cm, de préférence 15 à 16 fils par cm.

6. Bande d'enroulement de câble selon l'une quelconque des revendications 1 à 5, **caractérisée en ce que** la grosseur du fil est de l'ordre de 470 dtex.

7. Bande d'enroulement de câble selon l'une quelconque des revendications 1 à 6, **caractérisée en ce que** le fil est formé de 48 à 80 filaments, de préférence 68 filaments.

8. Bande d'enroulement de câble selon l'une quelconque des revendications 1 à 7, **caractérisée par** un allongement jusqu'à la rupture de 60 % au moins.

9. Bande d'enroulement de câble selon l'une quelconque des revendications 1 à 8, **caractérisée par** une résistance à la rupture dans une plage supérieure à 700 N/cm.

10. Bande d'enroulement de câble selon l'une quelconque des revendications 1 à 9, **caractérisée en ce que** la matière adhésive de la couche auto-adhésive (2) est une colle acrylate, en particulier une colle acrylate réticulable aux UV.

11. Bande d'enroulement de câble selon l'une quelconque des revendications 1 à 10, **caractérisée en ce que** la matière adhésive dans la couche adhésive (2) est déposée avec un poids par unité de surface spécifique de 60 à 150 g/m², de préférence de 95 à 105 g/m² environ.

12. Bande d'enroulement de câble selon l'une quelconque des revendications 1 à 11, **caractérisée en ce que** la force d'adhérence sur le dos de la bande se situe dans une plage de 5,7 à 6,4 N/cm.

13. Bande d'enroulement de câble selon l'une quelconque des revendications 1 à 12, **caractérisée en ce que** la force d'adhérence sur l'acier se situe dans une plage de 4,5 à 5,7 N/cm.

14. Bande d'enroulement de câble selon l'une quelconque des revendications 1 à 13, **caractérisée en ce que** la force de déroulement se situe dans une plage de 6,2 à 12,3 N/19 mm.
